(19) Europäisches Patentamt
European Patent Office
Office européen des brevets

(11) **EP 2 883 586 B1**

(12) **EUROPEAN PATENT SPECIFICATION**

(45) Date of publication and mention
of the grant of the patent:
**22.02.2017 Bulletin 2017/08**

(51) Int Cl.:
**B01D 17/02** *(2006.01)*        **B04C 5/28** *(2006.01)*
**B04C 5/30** *(2006.01)*

(21) Application number: **13197553.4**

(22) Date of filing: **16.12.2013**

(54) **A fluid treatment system and a method of treating a mixture**

Flüssigkeitsbehandlungssystem und Verfahren zur Behandlung einer Mischung

Système de traitement de fluide et procédé de traitement d'un mélange

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.06.2015 Bulletin 2015/25**

(73) Proprietor: **National Oilwell Varco, L.P.**
**Houston, TX 77036 (US)**

(72) Inventor: **Wolf, Mark**
**Katy, Texas 77450 (US)**

(74) Representative: **Gill Jennings & Every LLP**
**The Broadgate Tower**
**20 Primrose Street**
**London EC2A 2ES (GB)**

(56) References cited:
**WO-A1-85/00851        WO-A1-91/12893**
**WO-A1-95/04702        US-A1- 2013 098 850**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an apparatus for separating a mixture of two fluid components. In particular, it relates to an apparatus with improved blockage detection, blockage clearing, and system control.

In oil production processes, a mixture of oil and water is often recovered. The mixture that is recovered in this way is unwanted and needs to be disposed of. However, it is not environmentally appropriate to dispose of water while it is still contaminated with oil. Therefore, there is a need to separate the oil from the water.

In practice, there are certain limitations on the apparatus that can be used for this separation. For onshore applications, large skim tanks in combination with flotation equipment have been used to remove oil from water. However, in certain urban oil production locations, the use of tanks and non-pressurized separation equipment is under scrutiny due to their emission of hazardous pollutants to the atmosphere as well as their large area footprint. In addition, the constraints of offshore oil production, such as the size of the offshore platform, require that the separation apparatus is both effective and compact. Over recent decades, cyclone separators have been developed to meet these requirements. Specifically, deoiling hydrocyclones for the removal of oil from water have become popular for offshore applications in the oil and gas industry.

A deoiling hydrocyclone separator operates by converting pressure energy into velocity as a fluid mixture of water and oil enters the hydrocyclone through a tangential inlet. This causes the fluid inside the hydrocyclone to spin, which creates a centrifugal force thousands of times higher than the force of gravity within the fluid. The centrifugal force multiplies the natural buoyancy of small oil droplets that have a relatively low density within the water, which has a relatively high density. Consequently, the heavier water phase is directed towards the edges of the hydrocyclone, while the lighter oil phase is retained at the center of the hydrocyclone. The two phases of oil and water can then be extracted from the hydrocyclone separately; the water is extracted via a clean water outlet while the oil is extracted via a waste reject line.

Compared with alternative separation devices, such as skim tanks, a hydrocyclone separator yields a much faster separation process within a smaller area because the active gravitational force in the skim tank is effectively replaced by centrifugal forces in the hydrocyclone, which are of a far higher magnitude. These high centrifugal forces also allow hydrocyclone separators to be relatively insensitive to motion and orientation, making them particularly ideal for offshore applications in the oil industry.

Nevertheless, there remain difficulties in implementing effective hydrocyclone separator systems at a reasonable cost with the required reliability. Existing deoiling hydrocyclone arrangements typically comprise a hydrocyclone separator that receives a mixture of water and oil from an upstream fluid store, and rejects the separated fluids via a clean water outlet and an oily waste outlet. For example, for reasons of size and efficiency such systems often comprise plural individual hydrocyclone separators operating in parallel and have relatively narrow outlet apertures. This can lead to individual separators in the array becoming blocked, particularly at their oily waste outlets. Such blockage results in reduced efficiency and quality of separation but is difficult to detect with current systems because the remaining separators in the array continue to operate. Conventionally this leads to an approach in which the system is taken off-line at predetermined intervals for cleaning. However this is inconvenient as the process requires manual operation and the interval has to be set for a worst case situation for safety and quality control reasons. This introduces logistical problems if the system is to be located in a remote area as it requires regular visits by an operator.

Another problem is the backwashing of such systems from cleaning. Backwashing can lead to simple movement of blocking material within the separator without actually removing it from the system, and has a tendency to require complex manual intervention as well as the potential for inefficient and ineffective cleaning given the standard backwashing process and the construction of the separator itself.

WO 91/12893 discloses a hydrocyclone separation system.

WO 95/04702 discloses another hydro-cyclone separation systems.

There is an ongoing desire to improve fluid separation apparatus for use in onshore and offshore oil operations and elsewhere. In particular, there is a desire to improve the operational efficiency of the hydrocyclone system and maintain a constant operation while simultaneously retaining reliability of the system and avoiding prohibitive expenses. There is also a desire to automate such system when possible to avoid manual intervention. In addition there is also a desire to improve the cleaning of such separators so that blockages are removed efficiently and effectively and downtime of the separator for cleaning is minimised.

According to a first aspect of the present invention, there is provided a fluid treatment system for separating a mixture of a first fluid and a second fluid, comprising:

a hydrocyclone separator comprising a separating chamber comprising plural hydrocylcones, an inlet for receiving the mixture, a first outlet for discharge of the first fluid from the separating chamber and a second outlet for discharge of the second fluid from the separating chamber;
a reject chamber positioned within the separator and common to the plural hydrocyclones and adjacent to the first outlet and a backflush conduit connected directly to the reject chamber for supplying fluid for cleaning the reject chamber during a backflush operation, wherein backflush conduit is positioned at the bottom of the reject chamber, and,

first outlet is positioned at the top of the outlet chamber, wherein the backflush conduit is connected to the second outlet to allow fluid from the second outlet to pass into the reject chamber; and further comprising a valve for controlling the inlet of fluid into the backflush conduit.

With the system of the present invention it is possible to provide a backflushing operation which supplies cleaning fluid directly into the reject chamber where blockage is most likely to occur. With the position of the backflush conduit at the bottom of the chamber it is possible to drive fluid up into the chamber and also to have a configuration in which, when the first outlet is positioned at the top of the reject chamber, less dense fluids, such as oil, are positioned at the outlet and can be flushed away simply and easily to ensure a high level of cleaning during backflushing. When the backflush conduit is connected to the second outlet it is possible for the system to be operated through components that are already provided in the system for other operations, such as pressure differentials measurement components, to control the backflush operation to ensure clean fluids such as water can be supplied sufficiently from the separator itself without the need of interaction with other components within a larger system.

In some arrangements, one or more additional fluid treatment elements may be introduced to the fluid treatment apparatus. For example, these additional treatment elements may comprise de-sanding cyclones and/or filters for the removal of solids, coalescers for the separation of emulsions, electro-coagulators for the removal of contaminants or ultraviolet and ultrasonic fluid disinfectants. The position of the additional fluid treatment elements within the fluid processing apparatus is dependent on its specific purpose.

According to the present invention, there is also provided a method of operating the system defined above.

With the present invention, through the simple monitoring of pressures and flows, it is possible to detect at early stage a blockage which may affect the efficiency of the separator and its associated system. Following on from that detection it is possible to raise an alarm for either manual intervention or to trigger an automated intervention to remove the blockage. Accordingly, it is possible to provide a system and method which operates far more efficiently and with a far more reliable separation level than is possible with prior art configurations.

Examples of the present invention will now be described, by reference to the accompanying drawings, in which:

Figure 1 illustrates a cyclone separator;
Figure 2 illustrates a prior art fluid processing apparatus;
Figures 3A and 3B illustrate how an array of separators can be constructed to form a separator device;
Figure 4 illustrates a fluid processing apparatus according to an embodiment of the present invention;
Figure 5 is a graph showing percentage reject flow versus pressure differential ratio for an ideal separator system;
Figure 6 is a graph showing the measured percentage reject flow versus pressure differential ratio for a separator system under actual operating conditions;
Figure 7 illustrates one approach to backwashing when required in a system according to the invention; and
Figure 8 illustrates a system according to the invention and constructed to improve backwashing when required according to the invention

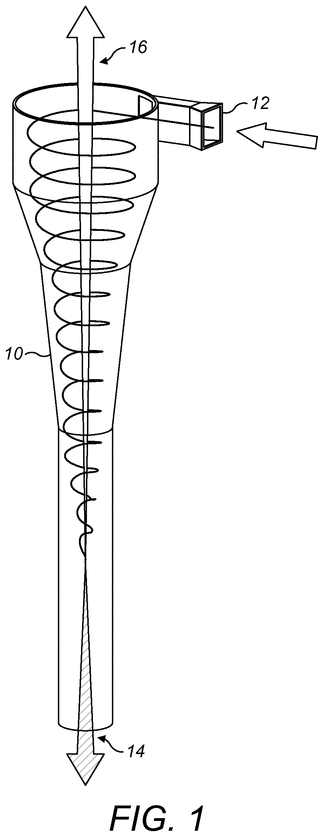

Referring to Figure 1, a fluid treatment system is shown comprising a de-oiling hydrocyclone separator 10, an inlet 12, a clean water outlet 14 and an oily waste outlet 16. The separator 10 is designed to separate oil from water by inducing a cyclone within the separator 10. The water outlet 14 and the oily waste outlet 16 are illustrated figuratively, with arrows indicating the direction of movement of fluid through these features, but the skilled person will appreciate that in practice they are implemented using physical pathways.

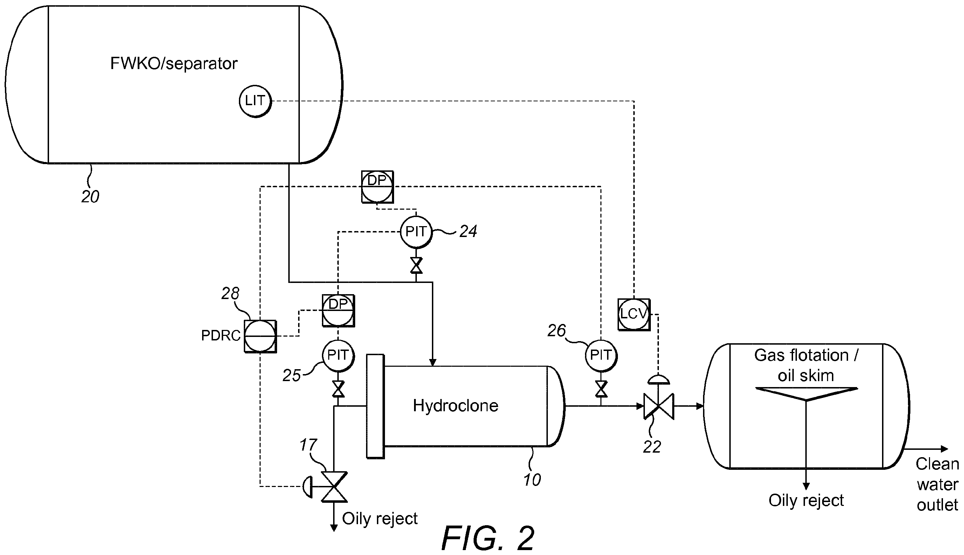

The position of fluid treatment system 1 comprising separator 10 within a known fluid processing apparatus 2 is shown in Figure 2. In Figure 2, the fluid processing apparatus 2 comprises an initial fluid store 20, which contains a mixture of oil and water. The fluid store 20 is coupled to the separator 10. In use, within a fluid processing apparatus 2, a mixture of untreated oil and water is passed from the fluid store 20 through connection into the separator 10. This may optionally be done using pressure generated by a pump although this depends on the pressure of the system. On entering the separator 10, the mixture is caused to rotate in the separation chamber, creating a cyclonic effect. As a result, the denser fluid is forced towards the edge of the separation chamber, while the less dense fluid is retained in the axial center of the separation chamber. As a result, the water and oil are separated and can be extracted from the clean water outlet 14 and the oily waste outlet 16 respectively.

After the mixture of oil and water that was initially held in the fluid store 20 leaves the separator 10, it is divided into two components that pass through the clean water outlet 14 and the oily waste outlet 16. Ideally, these components would be pure water and pure oil respectively. However, in practice there may be a mixture of fluids in each component. One reason for this is that the proportions of oil and water in the initial mixture must be reflected in the proportions of the total fluid which is extracted through the different outlets. For example, if the initial mixture contains only 20% oil, but the oily waste outlet 16 removes 50% of the fluid from the separator, it is clear that the component in the oily waste outlet 16 will contain some water.

The oily waste fluid that leaves the separator 10 through oily waste outlet 16 is either passed for further processing or may be returned to the fluid store 20 through a fluid connection. A control valve 22 is coupled to monitor the interface between water and oil phases of the mixture in fluid store 20. As such, the control valve 22 may be automatically opened or closed to allow clean water to leave from the fluid treatment system through outlet 26 according to the interface level of water and oil in fluid store 20. For example, if the interface level in the fluid store 20 is too low, level control valve 22 will close to reduce the amount of fluid leaving the fluid processing apparatus 2. It will be appreciated that the control valve 22 could be used to control other external process variables such as flow rate. It will be further appreciated that the valve 22 further operates to provide a back pressure on the separator 10 to force oily reject from the separator 10 and out through outlet 16.

Once fluid has passed through the level control valve 22 to leave the fluid processing apparatus 2, it reaches the downstream treatment 30 (not shown in Figure 2) via outlet 26, in which one or more further steps of purification may be carried out, for example, to remove impurities from the water.

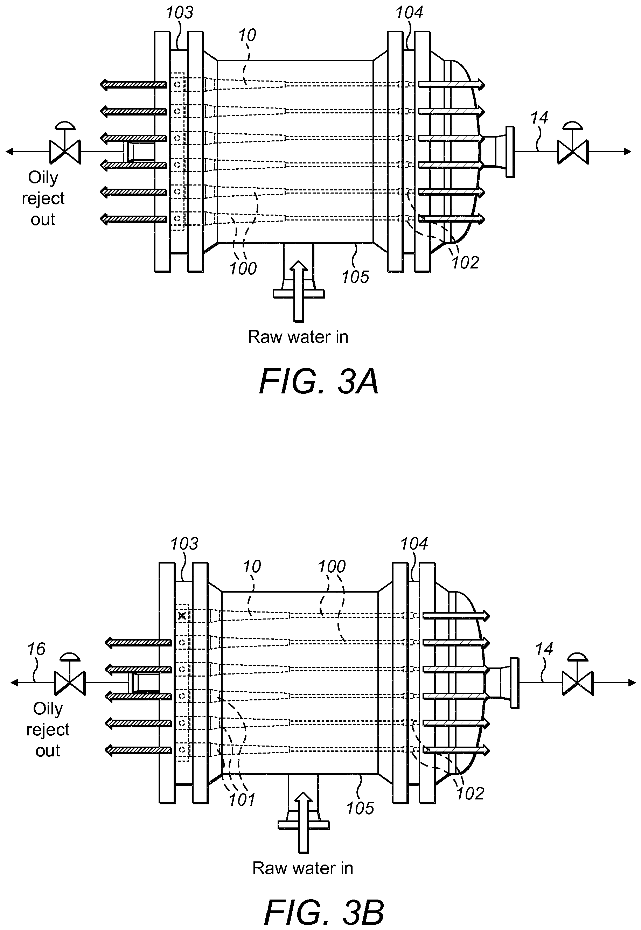

In Figures 3a and 3b there are shown schematic views of the construction of the separator device 10. Referring to Figure 3a, the separator device 10 is formed from an array of individual separators 100 within a housing 105, each of which receive fluid to be treated from the inlet and then each of which feed oily reject fluid out to the outlet 16 via reject chamber 103 and treated fluid to the outlet 14 via chamber 104. Such a structure is formed to improve the efficiency of separation, but it will be appreciated that this results in the oily reject orifice 101 of each individual separator 100 within the separator device 10 having a very small diameter opening relative to the processed water outlets 102. This can result in blockage. As can be seen from Figure 3b, in such a situation, where one reject orifice 101 is blocked, untreated water starts to pass through to the outlet 14. This reduces the quality of the treated fluid but is very difficult to detect as all the other separators 100 within the separator device 10 continue to operate normally. Over time more and more orifices 101 block, reducing significantly the treatment capability of the separator device 10.

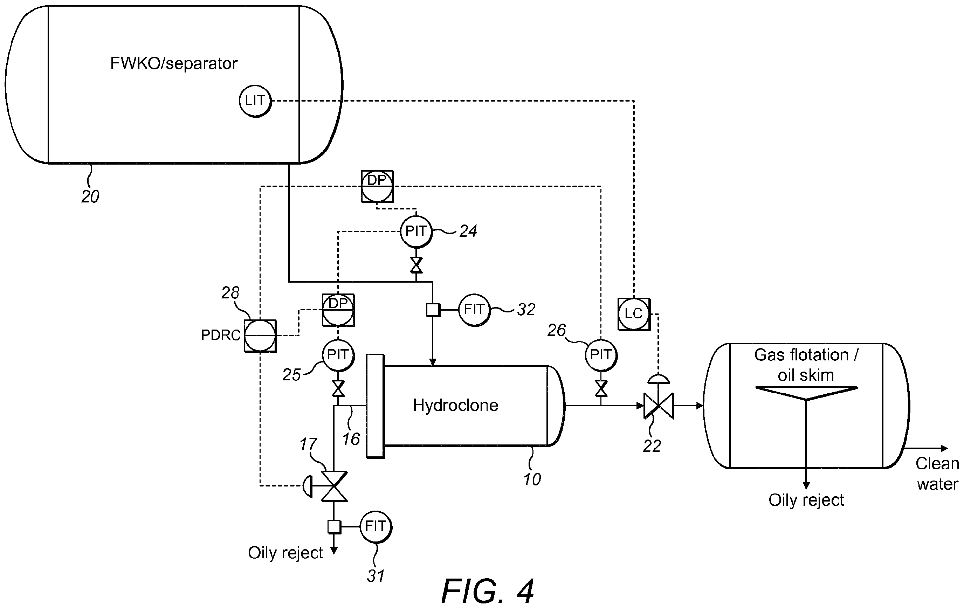

A fluid processing apparatus 3 in accordance with an embodiment of the present invention is illustrated in Figure 4. Components that correspond to those in the prior art configuration shown in figure 2 are numbered identically and will not be described again in detail. As with the prior art, the separator 10 device is a deoiling hydrocyclone and the first and second outlets of the separator device 10 are the clean water outlet 14 and oily waste outlet 16 respectively. Again the separator device is formed from an array of individual separators 100 within a housing 105.

With the present invention however pressure transmitters 24, 25 and 26 are provided at the inlet and outlet 16, 14 to provide to an operation control system 28 an indication of the operating pressures at each such that a pressure differential ratio according to the following formula:

$$PDR = \frac{P_{in} - P_{reject}}{P_{in} - P_{out}}$$

The control system 28 can then control the valve 17 at the waste outlet 16 to maintain a constant PDR. In addition however flow detectors (FITS) 31 and 32 are provided at the inlet of the separator device 10 and at the outlet 16 on the oily reject flow path. FIT 31 can be either on the reject as shown or on the clean water outlet. In another version FIT's can be on both the reject and clean water outlet to achieve the same calculation. The output from the flow detectors 31, 32 can also be fed back to the control device 28. By comparing the flow rate at the inlet and at the outlet 16 and by using the pressure differential ratio it is possible, either by use of a look-up table, or by mathematical processing, to provide an indication as to whether or not there is significant blockage in any individual reject orifice 101 within the separator device 10. Then a warning can be provided by the control system 28 to an operator to indicate that a cleaning process is required. Alternatively, an automated process can be initiated by the control system 28 to clear the blockages.

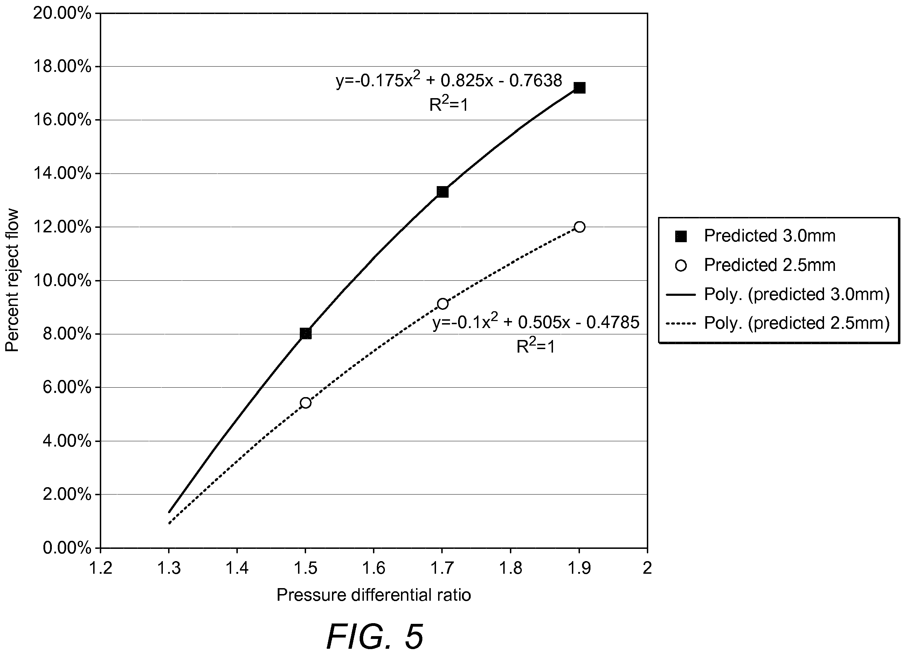

To understand more clearly the relationship between the measured PDR and the percentage of reject flow and how it can be used to detect blockages, it is worthwhile considering the relationship between percentage reject flow (i.e. the amount of flow going through reject outlet 16 compared to flow into the separator device 10) versus the PDR. An example relationship is shown in the graph of Figure 5. This shows relationships for two hydrocyclones with identical geometry overflow reject orifices of 2.5mm and 3.0mm. As will be appreciated, the volume fraction and PDR terms are dimensionless, which means that the relationship shown in Figure 5 would be constant for any number of hydrocyclones with identical geometry that operate in parallel. It will also be appreciated that a blockage in the reject orifice 101 of one hydrocyclone separator 100 in a parallel system is equivalent to a proportional blockage in the open area of the reject outlet of all the hydrocyclone separators 100 operating in parallel in the separator device 10.

For example, a hydrocyclone separator device 10 with ten individual hydrocyclones 100, each with a reject orifice of 3.0mm will have a total reject orifice area of:

$$A_R = 10 \times \pi \left(\frac{3.0}{2}\right)^2 = 70.69 mm^2$$

In a situation where three hydrocyclone reject orifices 101 become blocked then the remaining open area is:

$$A_R = (10 - 3) \times \pi \left(\frac{3.0}{2}\right)^2 = 49.48 \, mm^2$$

The system with three blocked hydrocyclones will provide the same pressure transmitter readings on the transmitters 24, 25 and 26 and therefore the same PDR as an equivalent system with all ten hydrocyclones 100 with an equivalent reject orifice diameter of:

$$D = 2 \times \sqrt{\left(\frac{48.48}{10 \times \pi}\right)} = 2.51 \, mm$$

From this an ideal curve of percentage reject flow versus PDR can be created for any de-oiling hydrocyclone geometry. This reference data can be stored by the control device 28, or the control device 28 can be provided with the necessary processing power to provide appropriate calculations to calculate this during operation.

By use of the flow detectors 31 and 32 it is possible to actually measure the percentage of reject flow during operation as well as the PDR during operation.

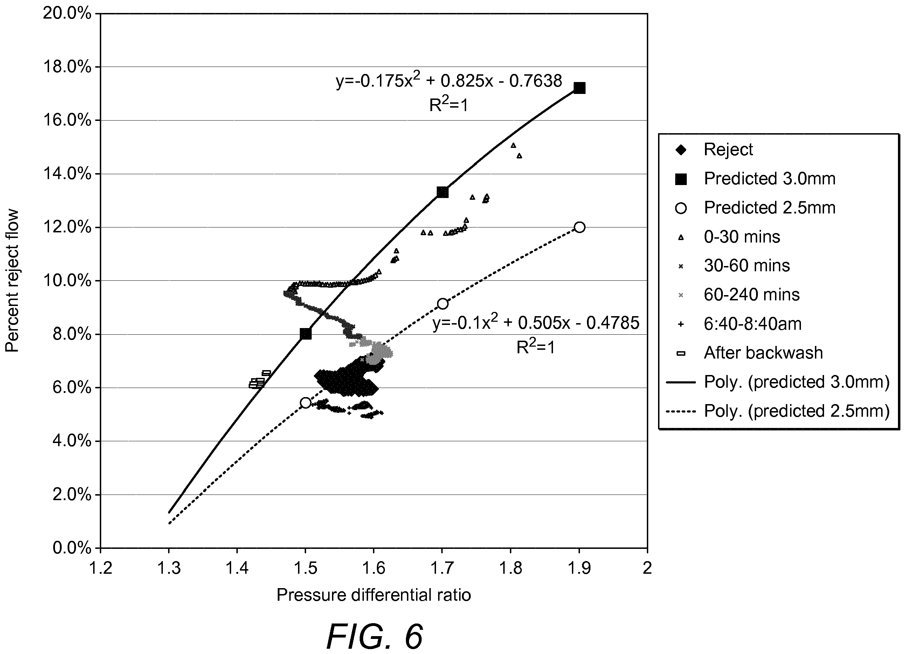

Figure 6 shows where this has been done over time for a device with an orifice of 3.0mm.

The data shows that all the hydrocyclones 100 within the separator device remained relatively clear during the first 30 minutes of operation. After this time the data points on the graph move away from the ideal curves showing that there is an accumulation of blockage of orifices. As is particularly notable, after a backwash occurs, the data points that are obtained come back to the ideal curve.

One approach to the processing required to detect a level that any blockage is such that either manual or automated cleaning of the system is required through backwashing is to model the ideal curve for a particular separator device 10 by using a quadratic equation and then calculating a difference between the ideal conditions and actual conditions. From this a value for the percentage of open area of the reject orifices 101 for a device 10 can be calculated. d.

$$Ideal \; Reject \; \% = \frac{FIT_{Reject}}{FIT_{Inlet}}$$

e.

$$Actual \; Reject \; \% = a \, (PDR) + b(PDR) + c$$

Where a, b and c are coefficients derived from hydraulic testing of the hydrocyclone f.

$$\% Open \; Area = 100 \times (1 - \frac{(Ideal \; Reject\% - Actual \; Reject\%)}{Ideal \; Reject \; \%}$$

The percentage open area can then be monitored and when it falls below a certain threshold an indication can be provided by the control system 28 to an operator or an automated backwashing process can be initiated.

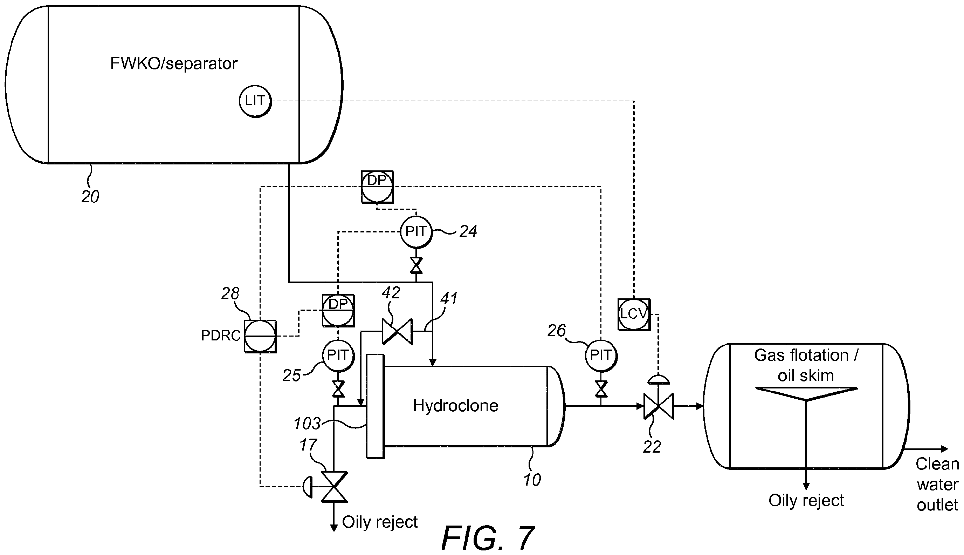

Referring to Figure 7 one approach to backflushing is shown in which a backflush conduit 41 is provided with corresponding backflush valve 42. This conduit 41 and valve 42 are provided between the oily reject outlet 16 and the inlet for the separator device 10. Otherwise the configuration is that of Figure 4, and the corresponding components are numbered identically.

In use, when it is determined that a backflush is necessary the reject control valve 17 is overridden and forced to close, with the backflush valve 42 then opening. This forces fluid from the inlet of the separator device 10 into the oily reject line 16. This then forces flow through the reject orifices (101) to reverse. Fluid is then passed through the separator device 10 to remove the contaminants either back to the storage unit 20 or out for further processing through the outlet 14, as required. While such an approach has benefits, there are also problems with it. For example, reversing the fluid flow in the reject line can re-introduce oily contaminants back into the reject chamber (103) and back through the oily reject orifices, causing further blockage. Furthermore, in many separator device configurations the reject outlet 16 is not connected at the top of the separator device 10. Since oil and debris at the outlet 16 of the separator device 10 is less dense than water, the rejected oil and debris can accumulate in the top of the reject chamber 103 above the reject outlet pipe 16. Reverse flow then actually amplifies the potential to reverse block the individual orifices 101 during a backflush operation.

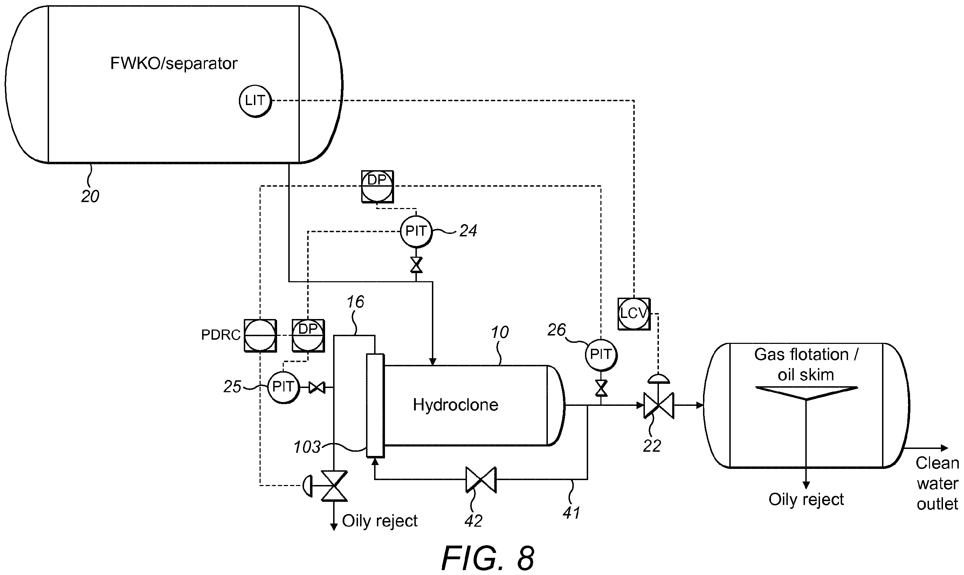

In an alternative backflush configuration as shown in Figure 8 some of the problems of the configuration in Figure 7 can be overcome. In this configuration, the backflush conduit 41 is connected directly to the reject chamber 103 of the separator device 10. Specifically, the backflush conduit 41 is connected at the bottom of the reject chamber 103 of the separator device 10. Furthermore, in this configuration the reject outlet 16 is configured to be positioned at the top of the reject chamber 103 of the separator device 10. This configuration has particular advantages because of the two separate connections to the reject chamber 103 of the separator device 10. The reject outlet line 16 connected at the top of the reject chamber 103 prevents floating oil and debris from collecting in the upper section of the reject chamber 103. The backflush conduit 41 connected at the bottom of the reject chamber 103 introduces cleaner backflush water directly into the reject chamber 103 instead of forcing contaminated water to backflow into the chamber from the reject outlet 16. In operation the backflush conduit 41 connects the separator device reject chamber 103 to the outlet 14 prior to its connection with the valve 42.

Again, such a system operates in the manner defined above with respect to the system of Figure 4. However, when it is determined that a backflushing operation is necessary the backflush valve 42 is opened, immediately increasing the pressure in the reject chamber 103 of the separator device 10. The control valve 17 opens to try and maintain a constant PDR for the system. This equalises the pressure between the outlet 14 and the reject chamber 103 and ultimately drives the control device 28 to fully open the reject control valve 17. This then results in a large amount of the fluid passing from the outlet 14 to be diverted to the reject chamber 103 of the separator device 10 and the reject outlet line 16. The lower pressure in the outlet 14 will increase the total flow through the separator device 10, which will produce a lower pressure in the central core of each individual hydrocyclone 100.

This combination of reduced pressure in the outlet (14) and increased pressure in the reject chamber 103 of the separator device 10 causes a reversal of flow through the hydrocyclone reject orifices 101 which clears the blockage. At the same time, high flow of fluid through the reject chamber 103 of the separator device 10 and reject outlet 16 provides a much cleaner water for backflushing while at the same time serving to flush the outlet 16. An additional benefit of this arrangement is that the backflush valve 42 can be operated, either manually or automatically without overriding the rest of the control process associated with maintaining the PDR at the desired level. It also has the benefit that, when the backflush valve 42 is closed at the end of a backflush process the control system 28 regains its previous balance automatically because of its knowledge of a desired PDR set point. Of course, the backflush valve 42 can be configured to operate automatically when it is determined that a backflush is required in accordance with the operation described above in respect of the system of Figure 4.

As will be appreciated from the above, the system of the present invention enables significantly improved operation of the separation system by the detection of blockage as and when it occurs, rather than relying on predetermined fixed intervals for cleaning of the system to remove any blockages. This improves the operating efficiency of the system as a whole and reduces the need for manual intervention to occasions when it is actually needed as well as also enabling the possibility of automated backwashing procedures which then reduce significantly the need for manual intervention at all.

## Claims

1. A fluid treatment system for separating a mixture of a first fluid and a second fluid, comprising:

> a hydrocyclone separator (10) comprising a separating chamber comprising plural hydrocylcones, an inlet (12) for receiving the mixture, a first outlet (16) for discharge of the first fluid from the separating chamber and a second outlet (14) for discharge of the second fluid from the separating chamber;
> a reject chamber (103) positioned within the separator and common to the plural hydrocyclones and adjacent to the first outlet and a backflush conduit (41) connected directly to the reject chamber for supplying fluid for cleaning the reject chamber during a backflush operation, wherein backflush conduit (41) is positioned at the bottom of the reject chamber (103), and,
> first outlet (16) is positioned at the top of the outlet chamber, wherein the backflush conduit (41) is connected to the second outlet (14) to allow fluid from the second outlet to pass into the reject chamber; and further comprising a valve (42) for controlling the inlet of fluid into the backflush conduit.

2. The system of claim 1, further comprising means for automatically operating the valve (42) when a blockage is detected within the system.

3. A method of operating a system according to any preceding claim, the method comprising the step of opening a valve to pass fluid into the backflush conduit (41) and into the reject chamber (103) to perform a backflush operation.

4. A method according to claim 3 wherein the fluid is applied by opening a valve (42) in the backflush conduit (41).


**Patentansprüche**

1. Fluidbehandlungssystem zum Trennen eines Gemischs aus einem ersten Fluid und einem zweiten Fluid, umfassend:

einen Hydrozyklon-Abscheider (10), umfassend eine mehrere Hydrozyklone umfassende Abscheidekammer, einen Einlass (12) zum Aufnehmen des Gemischs, einen ersten Auslass (16) zum Ablassen des ersten Fluids aus der Abscheidekammer und einen zweiten Auslass (14) zum Ablassen des zweiten Fluids aus der Abscheidekammer;
eine in dem Abscheider positionierte Abfallkammer (103), die den mehreren Hydrozyklonen gemeinsam ist und dem ersten Auslass benachbart ist und eine Rückspülleitung (41), die direkt mit der Abfallkammer verbunden ist, um Fluid zum Reinigen der Abfallkammer während eines Rückspülvorgangs zuzuführen, wobei die Rückspülleitung (41) unten an der Abfallkammer (103) positioniert ist, und
wobei der erste Auslass (16) oben an der Auslasskammer positioniert ist, wobei die Rückspülleitung (41) mit dem zweiten Auslass (14) verbunden ist, um Fluid von dem zweiten Auslass in die Abfallkammer gelangen zu lassen; und weiter umfassend ein Ventil (42) zum Steuern des Einlasses von Fluid in die Rückspülleitung.

2. System nach Anspruch 1, weiter umfassend Mittel zum automatischen Betätigen des Ventils (42), wenn eine Verstopfung in dem System erkannt wird.

3. Verfahren zum Betreiben eines Systems nach einem der vorangehenden Ansprüche, wobei das Verfahren den Schritt des Öffnens eines Ventils umfasst, um Fluid in die Rückspülleitung (41) und in die Abfallkammer (103) zu leiten, um einen Rückspülvorgang auszuführen.

4. Verfahren nach Anspruch 3, wobei das Fluid durch Öffnen eines Ventils (42) in der Rückspülleitung (41) aufgebracht wird.


**Revendications**

1. Système de traitement d'un fluide, pour séparer un mélange d'un premier fluide et d'un deuxième fluide, comprenant :

un séparateur à hydro-cyclone (10) comprenant un chambre de séparation munie de plusieurs hydro-cyclones, une entrée (12) pour la réception du mélange, une première sortie (16) pour le refoulement du premier fluide provenant de la chambre de séparation, et une deuxième sortie (14) pour le refoulement du deuxième fluide hors de la chambre de séparation ;
une chambre de rejet (103) positionnée au sein du séparateur, commune aux plusieurs hydro-cyclones, et adjacente à la première sortie, et un conduit de reflux (41) connecté directement à la chambre de rejet pour la fourniture de fluide pour le nettoyage de la chambre de rejet au cours d'une opération de reflux, le conduit de reflux (41) étant positionné au bas de la chambre de rejet (103), et
la première sortie (16) étant positionnée sur le dessus de la chambre de sortie, le conduit de reflux (41) étant connecté sur la deuxième sortie (14) de façon à permettre le passage du fluide de la deuxième sortie dans la chambre de rejet ; et comprenant en outre une vanne (42) assurant la régulation de l'introduction de fluide dans le conduit de reflux.

2. Système selon la revendication 1, comprenant en outre un dispositif pour l'actionnement automatique de la vanne (42) lorsqu'on détecte une occlusion dans le système.

3. Méthode d'utilisation d'un système selon une quelconque des revendications précédentes, la méthode comprenant l'étape d'ouverture d'une vanne pour permettre le passage de fluide dans le conduit de reflux (41) et dans la chambre de rejet (103) pour effectuer une opération de reflux.

4. Méthode selon la revendication 3, le fluide étant appliqué par l'ouverture d'une vanne (42) dans le conduit de reflux (41).

FIG. 1

*FIG. 2*

**FIG. 3A**

Oily reject out

Raw water in

**FIG. 3B**

Oily reject out

Raw water in

FIG. 4

FIG. 5

EP 2 883 586 B1

*FIG. 6*

EP 2 883 586 B1

FIG. 7

EP 2 883 586 B1

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9112893 A

- WO 9504702 A